# EUROPÄISCHE PATENTSCHRIFT

(11) **EP 1 008 013 B1**
(45) Veröffentlichungstag und Bekanntmachung des Hinweises auf die Patenterteilung: **28.08.2002**
(21) Anmeldenummer: 96946106.0
(22) Anmeldetag: 13.12.1996
(51) Int. Cl.: G02F 1/313

(54) **THERMO-OPTISCHER SCHALTER**
THERMO-OPTICAL SWITCH
COMMUTATEUR THERMO-OPTIQUE

(30) Priorität: 19.12.1995 DE 19549245
(43) Veröffentlichungstag der Anmeldung: 14.06.2000
(73) Patentinhaber: Heinrich-Hertz-Institut für Nachrichtentechnik Berlin GmbH, 10587 Berlin (DE)
(72) Erfinder: KEIL, Norbert, D-14089 Berlin (DE); YAO, Huihai, D-12163 Berlin (DE); ZAWADZKI, Crispin, D-12309 Berlin (DE); NOLTING, Hans-Peter, D-12353 Berlin (DE)
(74) Vertreter: Rudolph, Margit
(86) Internationale Anmeldenummer: DE9602466
(87) Internationale Veröffentlichungsnummer: WO97022907

(56) Entgegenhaltungen:
- PATENT ABSTRACTS OF JAPAN vol. 012, no. 192 (P-712), 4.Juni 1988 & JP 62 297827 A (FUJITSU LTD), 25.Dezember 1987,
- PROCEEDINGS OF THE SPIE, Bd. 2449, 1.Januar 1995, Seiten 281-292, XP000574147 KEIL N ET AL: "POLYMER THERMO-OPTIC SWITCHING MATRIX FOR SPACE-ROUTING IN TRANSPARENT OFDM NETWORKS"

## Beschreibung

Die Erfindung bezieht sich auf einen thermo-optischen Schalter mit einer auf einem Substrat angeordneten Schichtstruktur, welche eine Richtkoppler-Wellenleiterstruktur in einer wellenleitenden Schicht und eine der Form der Kopplerstruktur angepaßte Konfiguration der Heizelektrode oberhalb der wellenleitenden Schicht enthält.

Für die Vermittlung von breitbandigen optischen Signalen ohne vorherige Umwandlung in elektrische Signale sind Netzknoten (cross-connects) notwendig, die optisch transparent geschaltet werden können. Solche optisch transparenten Netzknoten enthalten u.a. Raumschalter, die die ankommenden optischen Signale auf die ausgewählte Ausgangsfaser leiten. An die Raumschalter werden folgende Anforderungen gestellt: geringes Übersprechen, geringe Einfügedämpfüng, Unabhängigkeit von der Polarisation des Signals, niedrige elektrische Ansteuerleistung, Ansprechzeiten < 10 ms, hohe Integrationsdichte, geringe Herstellungskosten.

In den letzten Jahren wurden thermo-optische Schalter auf Polymerbasis entwickelt, da die Eigenschaften der Polymerwellenleiter die Realisierung der o.g. Forderungen durch gezielte Strukturierung erwarten lassen. So weisen Polymere einen großen thermo-optischen Koeffizienten, d.h. die Änderung der Temperatur bewirkt eine große Änderung des Brechungsindexes, in Kombination mit einer geringen thermischen Leitfähigkeit auf. Daraus resultiert eine geringe Ansteuerleistung für einen thermo-optischen Schalter, die um den Faktor 100 unter der eines vergleichbaren SiO₂ - Schalters liegt. Da Polymere nur eine sehr geringe Doppelbrechung zeigen, lassen sich polarisationsunabhängige Bauelemente herstellen. Die Schaltzeiten liegen im ms-Bereich, typisch sind 1 ms bis 10 ms.

Die Verwendung von Polymer-Wellenleitern bietet außerdem die Möglichkeit der Herstellung der Raumschalter mittels relativ einfacher Verfahren, die bereits aus der Herstellung von mikroelektronischen Bauteilen bekannt sind. Zusätzlich bietet die Polymertechnologie die Möglichkeit, in Form einer Hybridtechnologie eine Vielzahl optischer Komponenten, wie z.B. III-V-Laser, Photodioden mit Polymerwellenleitern, -netzwerken, -schaltern auf einem einzigen Substrat zu integrieren. Damit wird die Herstellung von Elementen mit komplexen Funktionen auch kostengünstig möglich.

Ausgehend von dem oben erwähnten Kenntnisstand wurden in den letzten Jahren technische Lösungen gesucht, die möglichst viele der oben genannten Vorteile von Polymeren für optische Elemente nutzbar machen. Da die notwendige Ansteuerleistung und die Schaltzeiten der thermo-optischen Elemente hauptsächlich sowohl von den thermischen Eigenschaften abhängen, d.h. von der thermischen Leitfähigkeit, dem thermo-optischen Koeffizienten und der Wärmekapazität der Wellenleiterschicht, der Pufferschichten und des Substratmaterials, als auch von der Form und der Größe (Dimensionierung) der Wellenleiter und der Heizelektrode, sind dem Stand der Technik nach eine Vielzahl von thermo-optischen Elementen bekannt, die sich in ihrem konkreten Aufbau zur optimalen Realisierung einer definierten Funktion unterscheiden.

In Journal of Lightwave Technologie, Vol. 7, No. 3 (1989), pp.449-453 ist ein planarer thermo-optischer Polymerschalter beschrieben, bei dem auf einem PMMA (Polymethylmethacrylat)-Substrat eine polymere Wellenleiterschicht aus Polyurethan und darauf eine PMMA-Pufferschicht angeordnet ist, auf der sich eine Silber-Streifenleitungselektrode als Heizelement befindet. Die typischen Schaltzeiten sind 12 ms für das Ein-Aus-Schalten und 60 ms für das Aus-Ein-Schalten bei einer Ansteuerleistung von 100 mW.

In den meisten thermo-optischen Schaltern auf Polymerbasis sind die Wellenleiter streifenförmig ausgebildet, was eine Verringerung der Schaltzeiten und der Ansteuerleistung zur Folge hat. So ist in SPIE Vol. 1560, Nonlinear Optical Properties of Organic Materials IV (1991) pp. 426-433 ein polarisationsunabhängiger digitaler optischer Schalter (DOS) beschrieben, bei dem auf einer symmetrisch ausgebildeten Y-Verzweigüng des Wellenleiters auf einem der beiden Ausgangszweige eine streifenförmige Goldelektrode angeordnet ist, die dann eine asymmetrische Wirkung des beschriebenen Schalters bei Anlegen einer Heizspannung an diese Elektrode realisiert. Die Änderung des Brechungsindexes des amorphen Polymermaterials des Wellenleiters ist allgemein isotrop und somit polarisationsunabhängig für das sich durch die Struktur ausbreitende Licht. Der monomodige Wellenleiter aus DANS-Polymer, der auf einem Glas-Substrat angeordnet ist, wurde durch Ausbleichen (photobleaching) der nicht wellenleitenden Bereiche der Wellenleiterschicht mittels UV-Bestrahlung erzeugt und ist von einer Pufferschicht bedeckt. Die Schaltzeiten dieser Anordnung liegen in der Größenordnung von Millisekunden.

Ebenfalls über einen Y-förmigen Wellenleiter in einem DOS auf Polymerbasis wird in Proc. 21st Eur. Conf. on Opt. Comm. (ECOC' 95 - Brussels) 1995, pp 1063-1066 berichtet. Hier ist die Wellenleiterstruktur durch Photolithographie und anschließenders Trockenätzen von Gräben in ein Si-Substrat, anschließender thermischer Oxidation in Wasserdampf und somit Entstehen einer SiO₂-Pufferschicht, darauf Aufschleudern des Polymermaterials CYCLOTENE® und Abdecken der Polymerschicht mit einer weiteren SiO₂-Pufferschicht realisiert worden. Eine Titan-Dünnschichtelektrode ist zweigeteilt und liegt über den beiden Ausgangszweigen. Bei einer Ansteuerleistung zwischen 130 mW und 230 mW ist der Extinktionskoeffizient im geheizten Arm besser als 20 dB. Die optische Leistung wird nun vollständig durch den anderen - unbeheizten - Arm gerührt. Aber auch bei dieser technischen Lösung sind notwendige Ansteuerleistung und Schaltzeiten noch zu hoch.

In EP 0 642 052 A1 ist wiederum ein DOS auf Polymerbasis in einer Schichtstruktur Substrat, untere Pufferschicht, Wellenleiterschicht, obere Pufferschicht und Heizelement mit einer Y-förmigen Wellenleiterstruktur beschrieben, wobei die Brechungsindizes der beiden Pufferschichten kleiner sind als der Brechungsindex der Wellenleiterschicht. Außerdem ist der Brechungsindex der dem Heizelement benachbarten Pufferschicht kleiner als der der unteren Pufferschicht. Je nach gewünschten Parametern (optischer Verlust, Ansteuerleistung) zur Realisierung einer bestimmten Funktion sind Angaben zu Bereichen gemacht, in denen sich der Kontrast der Brechungsindizes bewegt, und es sind die Ausgangszweige des Wellenleiters bezüglich ihrer Abmessungen symmetrisch oder asymmetrisch ausgebildet und auch die Heizelemente symmetrisch (an beiden Ausgangszweigen) oder asymmetrisch (nur an einem Ausgangszweig) angeordnet. Die beschriebene Anordnung kann zwar auf eine präzise Stromkontrolle verzichten, benötigt jedoch eine höhere Ansteuerleistung und realisiert nur ein Übersprechen von etwa -20 dB.

Nur eine geringe Ansteuerleistung wird in einem in IEEE Photonics Technology Leiters Vol. 5, July 1993 pp. 782-784 beschriebenen thermo-optischen Schalter auf Polymerbasis benötigt, der ein Mach-Zehnder-Interferometer aufweist, über dessen beiden Wellenleitern Dünnschicht-Heizelemente angeordnet sind. Dieser optische Schalter realisiert zwar auch ein geringes Nebensprechen, jedoch ist die Gesamtlänge etwa dreimal so groß wie für einen konventioneller Richtkoppler.

Für ein anderes Wellenleiter-Materialsystem ist in Electronics Letters, 29th October 1981, Vol. 17, No.22, pp. 842-843 ein thermo-optisch induzierter Wellenleiterschalter auf der Basis von LiNbO₃:Ti beschrieben, bei dem auf einem Abschnitt des Wellenleiters eine Ni/Cr-Elektrode angeordnet ist. Bei Anlegen einer Wechselspannung an die Elektrode ändert sich in dem darunterliegenden Gebiet des Wellenleiters der Brechungsindex, wodurch das eingekoppelte Licht abgelenkt wird.

Außerdem sind Richtkoppler-Schalter mit alternierendem Δβ bekannt, wie z.B. in IEEE Jounal of Quantum Electronics, VoL QE-12, No. 7, pp. 396-401, July 1976, beschrieben. Hier sind auf parallel gerührten Wellenleitern aus dem bereits oben erwähnten Material LiNbO₃:Ti mehrere Elektrodensektionen angeordnet, die bei konkreten Ansteuerbedingungen in den darunterliegenden entsprechenden Wellenleitersektionen aufgrund des elektro-optischen Effekts eine Differenz der Ausbreitungsgeschwindigkeiten des Lichtes mit jeweils alternierendem Vorzeichen bewirken. Ist die Wechselwirkungslänge zwischen den beiden Wellenleitern größer als die Koppellänge, kann über die Ansteuerleistung der gewünschte Schallzustand (Kreuz- bzw. Geradeaus-Zustand) eingestellt werden.

Auch in Patent Abstracts of Japan vol. 12, no. 192 (P-712), 4. Juni 1988 # JP 62 297827 (Fujitsu Ltd.) ist ein Richtkoppler-Schalter mit alternierendem Δβ beschrieben, bei dem in einer ersten Variante ebenfalls mehrere (hier: je zwei) Elektrodenscktionen auf jedem der zwei parallel geführten Wellenleiter deckungsgleich zu diesen angeordnet sind und in einer zweiten Variante die Elektrodenkonfiguration stufenförmig ausgebildet ist, wobei die horizontalen Elektrodenabschnitte jeweils etwa eine Hälfte der Koppellänge der Wellenleiter bedecken und die von den Elektrodenabschnitten bedeckten Bereiche der Wellenleiter zueinander versetzt sind. Ein solcher Richtkoppler-Schalter ermöglicht nur das Schalten in den Geradeaus-Zustand (symmetrischer Schalter) ausgehend von einem für die Realisierung der Schaltfunktion Kreuz/Geradeaus schlechten Kreuz-Zustand, der technologisch bedingt ist.

In APPLIED OPTICS/ Vol. 17, No. 5/ 1 March 1978, pp. 769-773 sind im Zusammenhang mit der Untersuchung und Berechnung der Koppeleigenschaften von Richtkopplern, die gebildet sind von auf einem LiNbO₃-Substrat angeordneten Streifen eines dielektrischen Materials und zwischen diesen Streifen angeordneten Metallfilmen, verschiedene Möglichkeiten der Führung der beiden Wellenleiter dargestellt, bei denen jedoch immer der Kopplungskoeffizient nicht konstant ist.

Der Stand der Technik, von dem die Erfindung ausgeht, ist mehreren Veröffentlichungen, die alle den gleichen Gegenstand beschreiben, zu entnehmen: OFC' 95, Postdeadline Papers, PD 17-1, 1995; MICRO SYSTEM Technologics '94, 4th Int. Conf. on Micro, Electro, Opto, Mechanical Systems and Components, Berlin, October 19-21, 1994, vde-verlag gmbh, pp. 1097-1100; Jahresbericht 1994 des Heinrich-Hertz-Instituts für Nachrichtentechnik Berlin GmbH, pp. 54-55; SPIE Proccedings Series Vol. 2449, 1994, pp. 281-292 zu nennen. In den zuletzt genannten Publikationen wird ein in integriert-optischer Form in Polymertechnik hergestelltes thermo-optisch abstimmbares (4x4)-Schaltfeld beschrieben, dessen Basiselement ein als 2x2-Richtkoppler ausgebildeter thermo-optisch gesteuerter Schalter der eingangs erwähnten Art ist.

Dieser 2x2-Richtkoppler weist zwei symmetrisch zueinander angeordnete Wellenleiter auf, deren mittlere Teile eng zueinander benachbart sind, so daß es unter kontrollierten Bedingungen zu einem Übersprechen des Lichts von dem einen in den anderen Wellenleiter kommt. Die über nur einem Wellenleiter angeordnete Elektrode heizt bei Anlegen einer Spannung diesen Wellenleiter geringfügig auf, wodurch sich dessen Brechungsindex ändert und so ein Wechsel des Lichts von dem einen Wellenleiter in den anderen bewirkt wird. Die in der Heizelektrode erzeugte Wärme diffundiert durch die obere Pufferschicht, die Wellenleiterschicht und die untere Pufferschicht hindurch in das Si-Substrat, das als Wärmesenke wirkt. Dabei wird wegen des negativen Temperaturkoeffizienten des Wellenleitermaterials der Brechungsindex in dem Wellenleiter verringert und dadurch die Ausbreitungskonstante des Wellenleiters verändert. Der Effekt der thermooptisch induzierten Phasenverschiebung in Wellenleitern wird - wie bereits erwähnt - in Mach-Zehnder- oder Richtkoppler-Strukturen zum Schalten benutzt. Der asymmetrische Koppier ist sehr kurz und weist einen geringen Leistungsverbrauch auf. Das Extinktionsverhältnis am anfänglichen Kreuz-Zustand (cross-state) wird durch die Wahl einer geeigneten Koppellänge eingestellt, nachträglich kann eine Einstellung nicht mehr vorgenommen werden. Die prozeßbedingten Herstellungstoleranzen begrenzen das Extinktionsverhältnis im Kreuz-Zustand auf typisch -25 dB, was zu einem minimalen Nebensprechen von nur -21,5 dB in der (4x4)-Matrix führt. Für unterschiedliche Kopplerelemente mit einer Elektrodenlänge von 3 mm wurden Extinktionsverhältnisse zwischen 20 dB (Kreuz) und 32 dB (Geradeaus) gemessen bei einem Leistungsverbrauch von 30 bis 40 mW gemessen. Die Schaltzeiten wurden mit kleiner 1 ms angegeben. Der Koppler ist so ausgebildet, daß er sich bei Nichtheizen der Elektrode im Kreuz-Zustand befindet, d.h. das in das eine Eingangstor eingekoppelte Licht wird von dem Eingangswellenleiter auf den parallel verlaufenden benachbarten Wellenleiter übergekoppelt und tritt an dessen Ausgangstor aus. Wird die Elektrode geheizt, tritt das Licht an dem Ausgangstor des gleichen Wellenleiters - geradeaus ("bar") - aus.

Die beschriebenen Schalteranordnungen werden unter staubfreien Bedingungen prozessiert. Dazu wird ein Silizium-Substrat, das zugleich als Wärmesenke dient, durch thermische Oxidation mit einer SiO₂-Passivierungsschicht bedeckt. Darauf werden nacheinander die PMMA-Wellenleiterschicht und eine weitere Passivierungsschicht aus Teflon aufgeschleudert. Das PMMA wird mit einem Photoinitiator-Molekül dotiert, in welchem - bei intensiver Belichtung mit UV-Strahlung - ein photochemischer Prozeß ausgelöst wird (lichtinduzierte Materialverdichtung/photolocking), der zu einer Brechungsindexerhöhung der Wellenleiterschicht führt. Durch eine lokale UV-Belichtung über eine Photomaske werden die wenige µm-breiten integriert-optischen Lichtwellenleiter definiert. Durch Wahl geeigneter Mischungsverhältnisse von Photoinitiator und PMMA und durch Variation der Belichtungsdosis kann der Brechungsindex und die Brechungsindexdifferenz zwischen belichtetem und unbelichtetem Gebiet in einem weiten Bereich sehr genau eingestellt werden. In einem nachfolgenden Prozeßschritt werden die noch vorhandenen Photoinitiator-Moleküle aus den unbelichteten Bereichen der Wellenleiterschicht ausgeheizt, die Wellenleiterstrukturen sind damit fixiert. Abschließend wird eine Aluminium/Goldschicht aufgedampft, aus der die Mikro-Heizelektroden naßchemisch herausgeätzt werden.

Neben der asymmetrischen Elektrodenkonfiguration bezüglich der optischen Achse, die für einen konkreten Schalter beschrieben wird, ist auch allgemein eine symmetrische Elektrodenkonfiguration erwähnt, bei der eine einteilige streifenförmig ausgebildete Heizelektrode symmetrisch zur optischen Achse des Richtkopplers angeordnet ist. Dadurch unterliegen beide Wellenleiter dem selben Einfluß der Heizelektrode und erlauben ein gleichzeitiges Koppeln zwischen den sich überlappenden Modenenden. Prinzipiell ist also ein 100%iger Transfer der optischen Leistung von einem Wellenleiter in den anderen Wellenleiter in der symmetrischen Elektrodenkonfiguration und damit ein hohes Extinktionsverhältnis realisierbar. Jedoch erfordert der Betrieb eines symmetrischen Schalters eine zu hohe Schaltleistung (für Polymerwellenleiter einige Hundert mW pro Schalter; für Si-Wellenleiter einige W pro Schalter), wodurch eine praktische Anwendung bisher ausblieb. Auch die zuletzt beschriebenen Anordnungen weisen noch einen zu hohen Leistungsverbrauch und ein zu großes Übersprechen auf.

Deshalb ist es Aufgabe der Erfindung, einen thermo-optischen Schalter anzugeben, dessen Leistungsverbrauch und Übersprechen im Vergleich zum Stand der Technik niedriger ist, dessen Herstellung aber nicht aufwendiger sein soll als bei bisher bekannten thermo-optischen Schaltern.

Die Aufgabe wird erfindungsgemäß dadurch gelöst, daß in einem thermo-optischen Schalter der eingangs erwähnten Art zwei über ihre Wechselwirkungslänge dicht benachbart verlaufende Wellenleiter mindestens teilweise in ihrer Breite von mindestens einem Paar lamellenartig ausgebildeten, über einen gemeinsamen Steg verbundenen Elektrodenarmen der Heizelektrode bedeckt sind, wobei jeder Wellenleiter über seine Wechselwirkungslänge mit dem anderen Wellenleiter vollständig von einem Elektrodenarm eines Elektrodenarmpaares bedeckt ist und die freien Enden der lamellenartig ausgebildeten Elektrodenarme eines Paares in die gleiche Richtung weisen, die beiden Elektrodenarme eine ähnliche geometrische Form aufweisen wie die darunterliegenden Wellenleiter, Mittel vorhanden sind, wodurch mindestens ein Elektrodenarm eines Elektrodenarmpaares elektrisch ansteuerbar ist, und weitere Mittel zur Änderung und/oder Einstellung der thermischen und/oder geometrischen Symmetric/Asymmetrie der Brechungsindizes in den beiden über ihre Wechselwirkungslänge dicht benachbart verlaufenden Wellenleitern vorhanden sind.

Die Aufgabe wird auch dadurch gelöst, daß in einem thermo-optischen Schalter der eingangs erwähnten Art zwei über ihre Wechselwirkungslänge dicht benachbart verlaufende Wellenleiter mindestens teilweise in ihrer Breite von zwei Paar lamellenartig ausgebildeten, je Paar über einen gemeinsamen Steg verbundenen Elektrodenarmen bedeckt sind, wobei die beiden Stege thermisch und elektrisch voneinander isoliert und symmetrisch zueinander angeordnet sind, die Elektrodenarme eine ähnliche geometrische Form aufweisen wie die darunterliegenden Wellenleiter, Mittel vorhanden sind, wodurch mindestens ein Elektrodenarm eines Elektrodenarmpaares elektrisch ansteuerbar ist, und weitere Mittel zur Änderung und/oder Einstellung der thermischen und/oder geometrischen Symmetrie/Asymmetrie der Brechungsindizes in den beiden über ihre Wechselwirkungslänge dicht benachbart verlaufenden Wellenleitern vorhanden sind.

Es wurde festgestellt, daß sowohl die geometrische als auch die materialspezifische Asymmetrie des erfindungsgemäßen Schalters bezüglich seiner optischen Achse einen wesentlichen Einfluß auf sein Schaltverhalten haben.

Deshalb sind Ausführungsformen vorgesehen, die die Symmetrie/Asymmetrie des thermo-optischen Schalters gezielt beeinflussen.

So können die Elektrodenarme eines Elektrodenarmpaares versetzt oder die Innenkanten der Elektrodenarme eines Elektrodenarmpaares deckungsgleich bezüglich der Innenkanten zu den darunterliegenden Wellenleitern angeordnet sein, um über die geometrische Anordnung Elektrodenarme/Wellenleiter das Schaltverhalten zu beeinflussen.

In einer anderen Ausführungsform ist vorgesehen, daß die zwei über ihre Wechselwirkungslänge dicht benachbart angeordneten Wellenleiter parallel zueinander geführt sind.

In weiteren Ausführungsformen ist ein Paar lamellenartig ausgebildeter Elektrodenarme über einen gemeinsamen Steg (U-förmig) verbunden und sind Mittel vorgesehen, wodurch mindestens ein Elektrodenarm eines Elektrodenarmpaares oder beide Elektrodenarme elektrisch ansteuerbar sind, wobei im letztgenannten Fall wahlweise einer der beiden Elektrodenarme mit einer konstanten Vorspannung beaufschlagbar ist oder wahlweise nur ein Elektrodenarm elektrisch angesteuert ist, oder die Heizelektrode H-förmig ausgebildet ist, wobei der die beiden Elektrodenarme verbindende Steg mittig zu den Elektrodenarmen angeordnet ist und die Elektrodenarme in Teilelektrodenarme unterteilt sind und jeweils ein Teilelektrodenarm gleichzeitig mit dem punktsymmetrisch angeordneten Teilelektrodenarm ansteuerbar ist, um so die thermische Symmetrie/Asymmetrie des Schalters zu beeinflussen.

Die gleichzeitige Ansteuerung beider Elektrodenarme, wenn ein Paar lamellenartig ausgebildeter Elektrodenarme über einen gemeinsamen Steg miteinander verbunden ist (U-förmige Elektrodenkonfiguration), erfordert zwar im Vergleich zur Ansteuerung nur eines Elektrodenarmes die doppelte Anzahl von Spannungsquellen und eine höhere Ansteuerleistung, da erst die bereits am anderen Elektrodenarm anliegende Vorspannung kompensiert werden muß, um die gleiche Wirkung wie bei der Ansteuerung nur eines Elektrodenarms zu erzielen, erhöht aber die Flexibilität in der Gestaltung der erfindungsgemäßen Lösung.

Bei Anlegen einer geringen Spannung an einen Arm der Heizelektrode dominiert das symmetrische Verhalten des erfindungsgemäßen Kopplers, die Wärme wird von dem angesteuerten Elektrodenarm zum nichtangesteuerten Arm der geteilten Elektrode auf Grund der hohen thermischen Leitfähigkeit in der gesplitteten Metallelektrode transportiert.

Um diese symmetrische Wirkung noch weiter zu verstärken, ist - wie bereits erwähnt - neben der bei der Herstellung der Mehrschichtstruktur auftretenden geringen Verschiebung der Elektrodenarme senkrecht zu den beiden Wellenleitern, ein Elektrodenarm gezielt um einen geringen Abstand zum darunterliegenden Wellenleiter versetzt, d.h. asymmetrisch bezüglich der optischen Achse des erfindungsgemäßen Schalters, angeordnet.

Es hat sich gezeigt, daß diese nichtdeckungsgleiche Ausrichtung der Elektrodenarme zu den beiden Wellenleitern die dominierende Asymmetrie darstellt. Weitere Möglichkeiten, eine Asymmetrie in der Schalterstruktur bezüglich ihrer optischen Achse zu erreichen, sind bereits genannt und werden weiter unten erläutert.

Liegt der anfängliche Arbeitspunkt eines solchen erfindungsgemäßen Schalters nahe dem Kreuz-Zustand, ist nur eine geringe Heizleistung notwendig, um den Kreuz-Zustand zu erreichen: Der Temperaturanstieg in beiden Armen der geteilten Elektrode ist sehr klein, ebenfalls die Temperaturdifferenz zwischen den beiden Elektrodenarmen, was auf die große thermische Leitfähigkeit der Metallelektrode zurückzuführen ist. Wird nun an den Elektrodenarm eine Spannung angelegt, der durch den Versatz der Elektrode gegenüber dem Wellenleiter diesen nicht mehr vollständig bedeckt, ist die Temperatur in diesem Arm etwas höher als in dem nichtangesteuerten Arm. Allerdings ist aufgrund der günstigeren geometrischen Lage des anderen - nichtangesteuerten - Elektrodenarms zum darunterliegenden Wellenleiter der Temperaturanstieg in beiden Wellenleitern gleich, so daß die Ausbreitungsgeschwindigkeit des Lichtes in den beiden Wellenleitern gleich ist, was der Wirkung eines symmetrischen Richtkopplers entspricht. Mit Vergrößerung der Heizleistung überwiegt die Wirkung als asymmetrischer Richtkoppler, was auf die immer größer werdende Temperaturdifferenz zwischen angesteuertem Elektrodenarm und nichtangesteuertem Elektrodenarm zurückzuführen ist.

Liegt nun der anfängliche Arbeitspunkt weiter entfernt vom Kreuz-Punkt, ist eine größere Heizleistung notwendig, um diesen Kreuz-Punkt zu erreichen. Ist die Heizleistung sehr hoch, wird auch die Temperaturdifferenz zwischen den Elektrodenarmen groß, da ja nur ein Arm angesteuert ist, damit ist auch die Ausbreitungsgeschwindigkeit des Lichtes in den entsprechenden unter dem angesteuerten und dem nichtangesteuerten Elektrodenarm liegenden Wellenleitern unterschiedlich. Unter diesen Bedingungen arbeitet der Schalter als asymmetrischer Richtkoppler und kann den ersten Kreuz-Punkt nicht erreichen.

Ist die Heizelektrode H-förmig ausgebildet ist, wobei der die beiden Elektrodenarme verbindende Steg mittig zu den Elektrodenarmen angeordnet ist und die Elektrodenarme in Teilelektrodenarme unterteilt sind und jeweils ein Teilelektrodenarm gleichzeitig mit dem punktsymmetrisch angeordneten Teilelektrodenarm ansteuerbar ist, dann wird in jedem Teilelektrodenarmpaar, bestehend jeweils aus den beiden auf einer Seite des gemeinsamen Stegs angeordneten Teilelektrodenarmen, ein Temperaturgradient erzeugt, der aber dem Temperaturgradienten im anderen Teilelektrodenarmpaar entgegen gerichtet ist. Aufgrund des thermo-optischen Effektes bewirken diese entgegengerichteten Temperaturgradienten in den Teilelektrodenarmen in den darunterliegenden entsprechenden Wellenleiterabschnitten das Einstellen einer Differenz der Ausbreitungsgeschwindigkeiten des Lichtes mit alternierenden Werten von Δβ jeweils in punktsymmetrisch zum gemeinsamen Steg unter den Teilelektrodenarmen angeordneten Wellenleiterabschnitten. Die Ansteuerung ist sowohl mit nur einer Quelle realisierbar, dann wird an die punktsymmetrisch angesteuerten Teilelektrodenarme die gleiche Leistung gegeben, in dem der Strom sowohl durch den einen Teilelektrodenarm als auch durch den anderen punktsymmetrisch angeordneten Teilelektrodenarm fließt, als auch mit zwei Ansteuerquellen, die auch zueinander verschiedene Ansteuerleistungen an die entsprechenden Teilelektrodenarme geben. Im ersten Fall werden gleich große Δβ in den Sektionen des thermo-optischen Schalters realisiert; bei Verwendung von zwei Quellen können die Werte für Δβ in den beiden Sektionen getrennt voneinander und somit unterschiedlich groß eingestellt. Mit dieser eben beschriebenen Ausführungsform kann das gewünschte Schaltverhalten des erfindungsgemäßen thermo-optischen Schalters weiter unterstützt werden.

Diese Wirkung zeigt sich noch günstiger, wenn zwei über ihre Wechselwirkungslänge dicht benachbart verlaufende Wellenleiter mindestens teilweise in ihrer Breite von zwei Paar lamellenartig ausgebildeten, je Paar über einen gemeinsamen Steg verbundenen Elektrodenarmen bedeckt sind, wobei die beiden Stege thermisch und elektrisch voneinander isoliert und symmetrisch zueinander angeordnet sind (Doppel-U-förmige Elektrodenkonfiguration), da der Wärmeaustausch dann abgegrenzt nur in einem Elektrodenarmpaar stattfindet und nicht miteinander wechselwirkt. Dabei können die Stege einander zugewandt, als auch um 180° gedreht in der gleichen Ebene angeordnet sein.

Andere Ausführungsformen, die voneinander unabhängig oder auch miteinander kombinierbar sind, beziehen sich auf weitere Mittel zur Einstellung der thermischen und/oder geometrischen Symmetrie/Asymmetrie der Brechungsindizes in den beiden über ihre Wechselwirkungslänge dicht benachbart verlaufenden Wellenleitern und betreffen die flexible Gestaltung der Elektrodenarme und Wellenleiter.

So sind diese Mittel
- unterschiedlich breit ausgebildete Elektrodenarme;
- unterschiedliche dick ausgebildete Elektrodenarme;
- aus unterschiedlichem Material gebildete Elektrodenarme;
- unterschiedliche Brechungsindizes aufweisende Wellenleiter;
- unterschiedlich breit ausgebildete Wellenleiter.

Die variable Führung der beiden Wellenleiter im erfindungsgemäßen thermo-optischen Schalter, d.h. der Kopplungskoeffizient ist im Bereich der beiden dicht benachbart geführten Wellenleiter nicht konstant, ermöglicht eine Verringerung der Wellenlängenabhängigkeit des Arbeitspunktes und damit eine Vergrößerung der Breitbandigkeit des erfindungsgemäßen Schalters. Die Form der Wellenleiter kann sehr verschieden gewählt werden, beispielsweise als zwei Geraden unter einem bestimmten Winkel, als einen geraden und einen gekrümmten oder als zwei gekrümmte Wellenleiter.

In einer anderen Ausführungsform sind auf dem Substrat (S) eine untere Pufferschicht (uP), auf dieser eine Polymer-Wellenleiter (WL1 und WL2) enthaltende wellenleitende Schicht (W) und darauf eine obere Pufferschicht (oP) angeordnet, auf der die Heizelektrode (E), die Polymer-Wellenleiter (WL1 und WL2) bedeckend, angeordnet ist.

In vorteilhaften Ausgestaltungen hierzu ist vorgesehen, daß
- der Brechungsindex der unteren Pufferschicht nur wenig kleiner ist als der Brechungsindex der Wellenleiter und die differenz der Brechungsindizes etwa 0,005 beträgt;
- die untere Pufferschicht aus zwei Teilschichten besteht, wobei die dem Substrat benachbarte Teilschicht einen viel kleineren Brechungsindex als die Wellenleiter aufweist;
- die Differenz der Brechungsindizes zwischen den Wellenleitern und der oberen Pufferschicht etwa 0,2 beträgt.

Die letztgenannte Ausführungsform mit ihren vorteilhaften Ausgestaltungen, ein thermo-optischer Schalter auf Polymerbasis, nutzt die bereits erwähnten und gewürdigten Möglichkeiten, die das Polymer als wellenleitendes Material besonders hierfür prädestiniert.

Die erfindungsgemäße Lösung gestattet durch die Variabilität der geometrischen, materialspezifischen und elektrischen Parameter der Heizelektrode und der Wellenleiter und durch verschiedene Ansteuermöglichkeiten der Heizelektrode die gezielte Beeinflussung der Symmetrie/Asymmetrie des TO-Richtkoppler-Schaltcrs, um die geforderten Parameter in seiner Wirkung als symmetrischer bzw asymmetrischer Schalter zu realisieren.

Als besonders vorteilhaft hat es sich erwiesen, die Parameter des Schalters nachträglich, d.h. nach seiner Herstellung, durch gezielte Ansteuerung der beiden Elektrodenarme oder nur eines Elektrodenarms verändern und somit den gewünschten Betriebsbedingungen anpassen zu können.

Die Änderung des elektrischen Widerstandes der Elektrodenarme über ihre Breite und Dicke und ihr Material ermöglicht mit einfachen technologischen Mitteln die Beeinflussung der symmetrischen bzw. asymmetrischen Eigenschaften des erfindungsgemäßen Schalters.

Um die Faser-Chip-Kopplungsverluste bei thermo-optischen Schaltern auf Polymerbasis zu reduzieren, ist der Brechungsindex der unteren Pufferschicht nur wenig kleiner als der Brechungsindex des Wellenleiters und die Differen der beiden Brechungsindizes beträgt etwa 0,005. Da die Differenz der beiden Brechungsindizes so klein ist, ist es notwendig, daß die untere Pufferschicht für den Betrieb des Schalters bei großen Wellenlängen sehr dick ist. Deshalb besteht die untere Pufferschicht aus zwei Teilschichten, wobei die dem Substrat benachbarte Teilschicht einen viel kleineren Brechungsindex als die Wellenleiterschicht aufweist. Damit die Ansteuerleistung weiter reduziert wird, ist die obere Pufferschicht so dünn wie möglich auszubilden. Deshalb sieht eine weitere - bereits erwähnte - Ausführungsform der Erfindung vor, daß die Differenz der Brechungsindizes zwischen der Wellenleiterschicht und der oberen Pufferschicht etwa 0,2 beträgt

Der erfindungsgemäße thermo-optische Schalter zeichnet sich durch extrem niedriges polarisationsunabhängiges Nebensprechen im Zusammenhang mit geringem Leistungsverbrauch aus. Seine Wirkungsweise und seine Kompaktheit ermöglichen den Einsatz dieses Schalters als Basiselement in großen Schaltmatrizen. Besonders vorteilhaft erweist sich die Möglichkeit, über die Ansteuervarianten der Elektrodenarme die gewünschten Parameter der einzelnen Schaltelemente in einer Matrix nachträglich einzeln einstellen zu konnen.

Weitere Merkmale und zweckmäßige Ausgestaltungsformen der Erfindung ergeben sich aus den folgenden Ausführungsbeispielen, die an Hand der Figuren näher erläutert werden.

Dabei zeigen
- Fig. 1: eine schematische Darstellung der Mehrschichtstruktur des erfindungsgemäßen Schalters auf Polymerbasis, mit einem Paar lamellenartig ausgebildeter Elektrodenarme in der Draufsicht;
- Fig. 2: einen Querschnitt der in Fig. 1 dargestellten Mehrschichtstruktur durch AA';
- Fig. 3: schematisch die Überkopplung des sich in den Wellenleitern WL1 und WL2 ausbreitenden Lichts;
- Fig. 4: schematisch eine parallele Führung der Wellenleiter WL1 und WL2 über ihre Wechselwirkungslänge L;
- Fig. 5: die Abhängigkeit der Überkopplung des Lichts von der Wechselwirkungslänge L der beiden parallelen Wellenleiter WL 1 und WL2;
- Fig. 6: schematisch einen Querschnitt entsprechend Fig. 2 mit bezüglich der Innenkanten der Wellenleiter WL1 und WL2 deckungsgleich angeordneten Elektrodenarmen E1 und E2
- a: mit einer symmetrischen Ansteuerung der Elektrodenarme E1 und E2;
- b: mit einer asymmetrischen Ansteuerung der Elektrodenarme E1 und E2;
- Fig. 7: schematisch einen Querschnitt entsprechend Fig. 2 mit bezüglich der Innenkanten der Wellenleiter WL1 und WL2 versetzten Innenkanten der Elektrodenarme E1 und E2, wobei
- a: der Elektrodenarm E1 angesteuert ist;
- b: der Elektrodenarm E2 angesteuert ist;
- Fig. 8: das Schaltverhalten eines erfindungsgemäßen Schalters auf Polymerbasis mit einer Struktur und angesteuert gemäß Fig. 7a;
- Fig. 9: das Schaltverhalten eines erfindungsgemäßen Schalters auf Polymerbasis mit einer Struktur und angesteuert gemäß Fig. 7b;
- Fig. 10: das Schaltverhalten eines erfindungsgemäßen Schalters auf Polymerbasis mit bezüglich der Innenkanten der Wellenleiter WL1 und WL2 versetzten Innenkanten der Elektrodenarme E1 und E2 bei gleichzeitiger Ansteuerung beider Elektrodenarme, wobei die Ansteuerleistung am Elektrodenarm E2 konstant ist;
- Fig. 11: wie Fig. 10, jedoch ist nun die Ansteuerleistung am Elektrodenarm E1 konstant;
- Fig. 12: eine schematische Darstellung der Schichtstruktur des erfindungsgemäßen Schalters auf Polymerbasis mit zwei Paar lamellenartig ausgebildeten Elektrodenarmen (E'1, E'2 und E"1, E"2), die symmetrisch an einem gemeinsamen Steg (G) angeordnet sind, in der Draufsicht;
- Fig. 13: eine schematische Darstellung der Schichtstruktur des erfindungsgemäßen Schalters auf Polymerbasis mit zwei Paar lamellenartig ausgebildeten und je Paar über einen gemeinsamen Steg (G', G") verbundenen Elektrodenarmen (E'1, E'2 und E"1, E"2).

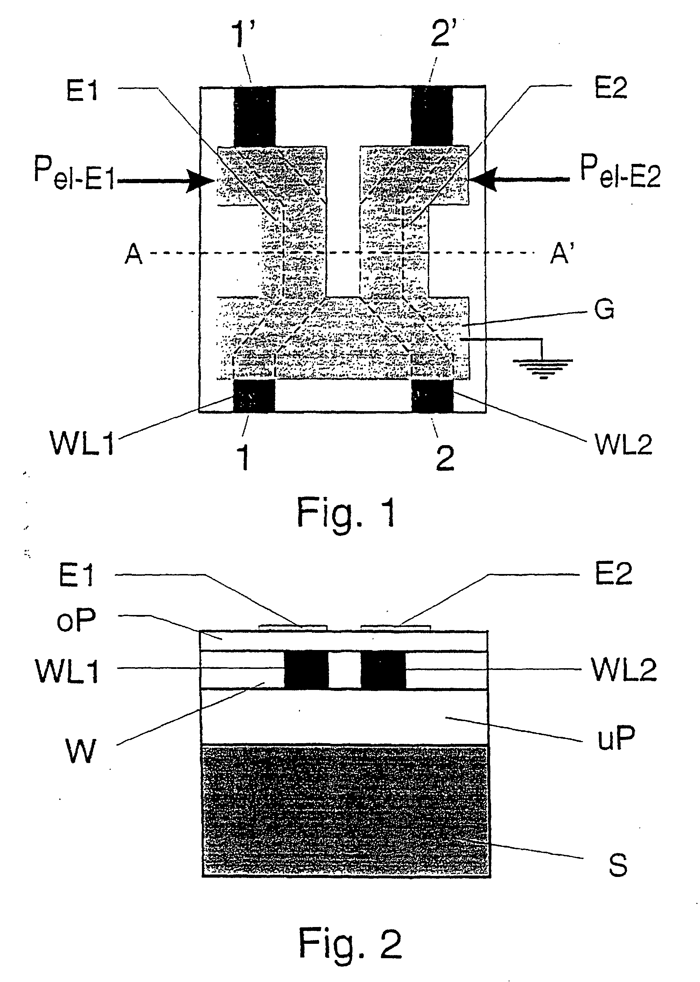

In Fig. 1 ist eine symmetrisch ausgebildete, zweigeteilte Elektrode **E** als oberste Schicht des erfindungsgemäßen thermo-optischen Schalters auf Polymerbasis deutlich zu erkennen. Über den beiden parallel zueinander geführten Wellenleitern **WL1** und **WL2** sind die beiden Elektrodenarme **E1** und **E2** deckungsleich zu diesen angeordnet. Die beiden Elektrodenarme **E1** und **E2** sind an einem Ende über einen Steg G miteinander verbunden (U-förmige Elektrodenkonfiguration), dieser gemeinsame Steg **G** befindet sich hier auf der Seite der beiden Eingangstore **1** und **2** des Schalters **TOS.** Wird der Querschnitt der Wellenleiter mit a µm x b µm bezeichnet, so ist in diesem Ausführungsbeispiel 5 µm ≤ a, b ≤ 10 µm, der Abstand zwischen den Wellenleitern **WL1** und **WL2** beträgt etwa 0,5a bis 1,5a und die Wechselwirkungslänge einige Millimeter.

Für die schematischen Darstellungen und die zu ermittelnden Meßkurven unter verschiedenen Ansteuerbedingungen in den folgenden Figuren weist der Schalter folgende Abmessungen auf: a = 6,0 µm, b = 5,0 µm; Abstand der Wellenleiter **WL1** und **WL2** zueinander 5,5 µm; Wechselwirkungslänge L = 4,5 mm. Der Abstand zwischen den Toren 1 und 2 und den Toren 1' und 2' der beiden Wellenleiter **WL1** und **WL2** beträgt 250 µm. Die Breite der beiden Elektrodenarme **E1** und **E2** ist mindestens so groß wie die Breite der Wellenleiter **WL1** und **WL2,** in diesem Beispiel beträgt sie 15 µm. Die Gesamtlänge des erfindungsgemäßen thermo-optischen Schalters ist in diesem Ausführungsbeispiel kleiner als 10 mm.

Bei dem in Fig. 2 dargestellten Querschnitt AA' der Mehrschichtstruktur des erfindungsgemäßen Schalters ist auf einem Silizium-Substrat **S** mit einer Dicke von 400 µm und einem Brechungsindex von n = 3,5 eine untere Pufferschicht **uP** aus SiO, mit einer Dicke von 6 µm und einem Brechungsindex von 1,475 angeordnet. Darauf befindet sich die wellenleitende Schicht **W,** bestehend aus 25 % BDK: 75 % PMMA mit einer Dicke von 5 µm und einem Brechungsindex von 1,5, die die Wellenleiter **WL1** und **WL2** mit rechteckigem Querschnitt (5 µm x 6 µm) und einem Brechungsindex von 1,505 enthält. Die wellenleitende Schicht **W** ist von einer weiteren Pufferschicht **oP** aus Teflon AF 1600 (d = 2,5 µm, n = 1,3) benachbart, auf der die 15 µm breiten Elektrodenarme **E1** und **E2** der Al/Au-Mehrschichtelektrode **E** deckungsgleich zu den beiden Wellenleitern **WL1** und **WL2** angeordnet sind. Die einzelnen Schichten sind mit dem Stand der Technik nach bekannten Verfahren herstellbar. Das Substrat **S** kann auch aus einem der nachfolgend aufgezählten Materialien ausgewählt sein: Glas, Polymermaterial, Keramik oder Metall. Vorzugsweise wird als Substrat eine Si-Platte verwendet, da Si eine viel höhere thermische Leitfähigkeit als Polymere aufweist und somit besonders gut als Wärmesenke für den thermo-optischen Schalter wirkt. Außerdem ist die Endflächenpräparation viel einfacher durch die Anwendung gut beherrschbarer Schneid- und Polierverfahren. Si hat einen sehr hohen Brechungsindex, deshalb muß die wellenleitende Schicht vom Si-Substrat mittels einer unteren Pufferschicht **uP** optisch getrennt werden. Als Material für diese Pufferschicht kann neben dem o.g. SiOₓ auch Glas oder Polymermaterial verwendet werden. Letzteres hat eine viel geringere thermische Leitfähigkeit als die beiden anderen genannten Materialien und hat eine Reduzierung der Ansteuerleistung des thermo-optischen Schalters zur Folge. Nach dem Trocknen der Pufferschicht **uP** wird die wellenleitende Schicht **W** aufgeschleudert. Die Streifen-Wellenleiter **WL1** und **WL2** sind mittels verschiedener Verfahren herstellbar, so sind beispielhaft genannt: Naß- oder Trockenätzen und lichtinduzierte Brechzahländerung, z.B. photobleaching, photolocking. Das Material der oberen Pufferschicht **oP** kann neben dem bereits erwähnten Teflon AF auch anderes Polymermaterial oder beispielsweise Glas oder SiOₓ sein. Um der dieser technischen Lösung zugrundeliegenden Aufgabe - Verringerung des Leistungsverbrauchs - gerecht zu werden, ist die obere Pufferschicht so dünn wie möglich ausgebildet und ihr Brechungsindex ist etwa um 0,2 kleiner als der Brechungsindex der wellenleitenden Schicht **W,** was durch die Auswahl der Schichtmaterialien gewährleistet ist. Abschließend wird dann eine 0,22 µm dicke Aluminium-Gold-Schicht aufgedampft und aus dieser die zwei Elektrodenarme **E1** und **E2** aufweisende Elektrode **E** naßchemisch herausgeätzt. Die durch elektrische Ansteuerung in der Al/Au-Elektrode **E** erzeugte Wärme diffundiert durch die obere Pufferschicht **oP**, die Wellenleiterschicht **W** und die untere Pufferschicht **uP** hindurch in das Si-Substrat **S,** das auch als Wärmesenke dient. Wegen des negativen Temperaturkoeffizienten des Wellenleitermaterials (dn/dT = -140 · 10⁻⁶/K) wird der Brechungsindex in der Wellenleiterschicht abgesenkt und dadurch die Ausbreitungskonstante der Wellenleiter verändert.

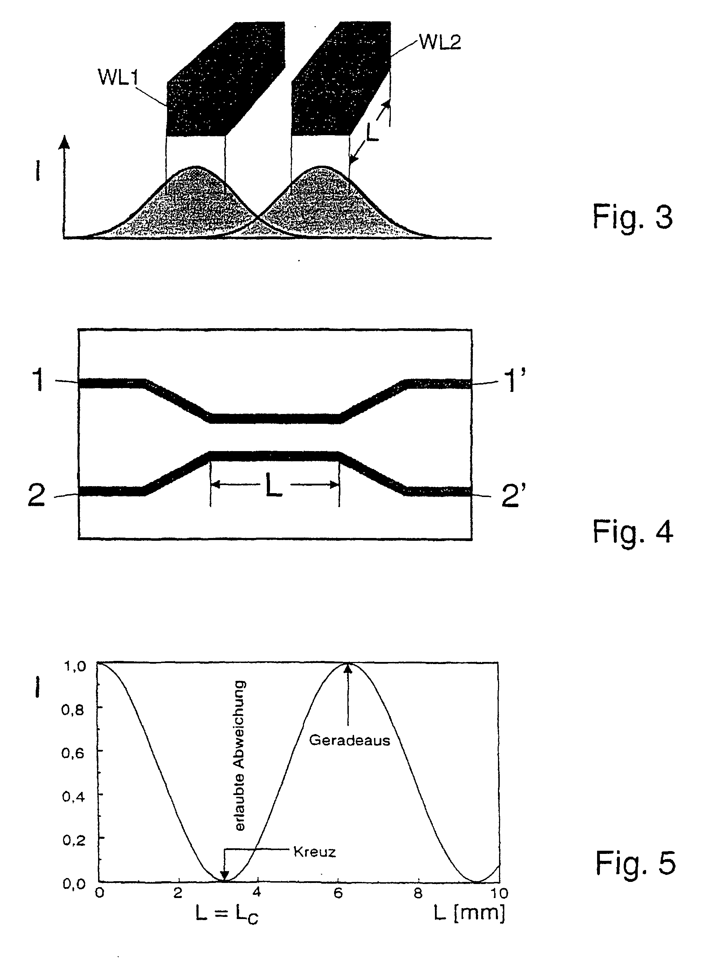

Aus Fig. 3, in der die Intensitätsverteilung **I** des sich in den Wellenleitern **WL1** und **WL2** ausbreitenden Lichts quer zur Ausbreitungsrichtung dargestellt ist, ist erkennbar, daß sich zwischen den beiden Wellenleitern **WL1** und **WL2** über die Wechselwirkungslänge **L** ein Koppelbereich ausbildet, der durch Änderung der Brechungsindizes (mittels Ansteuerung der Heizelektrode und folgender Temperaturänderung und somit Brechungsindexänderung der Wellenleiter) variierbar ist. In Abhängigkeit dieses Koppelbereiches können also Kreuz- und Geradeaus-Zustand eingestellt werden.

Fig. 4 zeigt die Anordnung der Wellenleiter **WL1** und **WL2** mit den entsprechenden Eingangs- bzw. Ausgangstoren **1** und **2** bzw. **1'** und **2'.** Über den Bereich der Wechselwirkungslänge **L,** in dem die beiden Wellenleiter **WL1** und **WL2** parallel und dicht benachbart angeordnet sind, erfolgt das Ein- bzw. Auskoppeln des sich in den Wellenleitern ausbreitenden Lichts.

In Fig. 5 ist die Abhängigkeit der Überkopplung des Lichts von der Wechselwirkungslänge **L** des Schalters bei fixierter Wellenleiterform und Wellenleiterdimensionierung und fixiertem Abstand zwischen den beiden Wellenleitern **WL1** und **WL2** dargestellt. Aus der Zeichnung ist ersichtlich, daß die Abweichung von der Wechselwirkungslänge **L**, die am Kreuz-Punkt gleich der Koppellänge L_{c} ist, bis zu 25 % zu größeren Längen hin variieren kann, damit der erfindungsgemäße Schalter als symmetrischer Schalter wirkt, d.h. der erste Kreuz-Punkt auch geschaltet werden kann. Diese innerhalb der gewünschten symmetrischen Wirkung erlaubte Abweichung ist vorteilhaft für die Herstellung des erfindungsgemäßen Schalters.

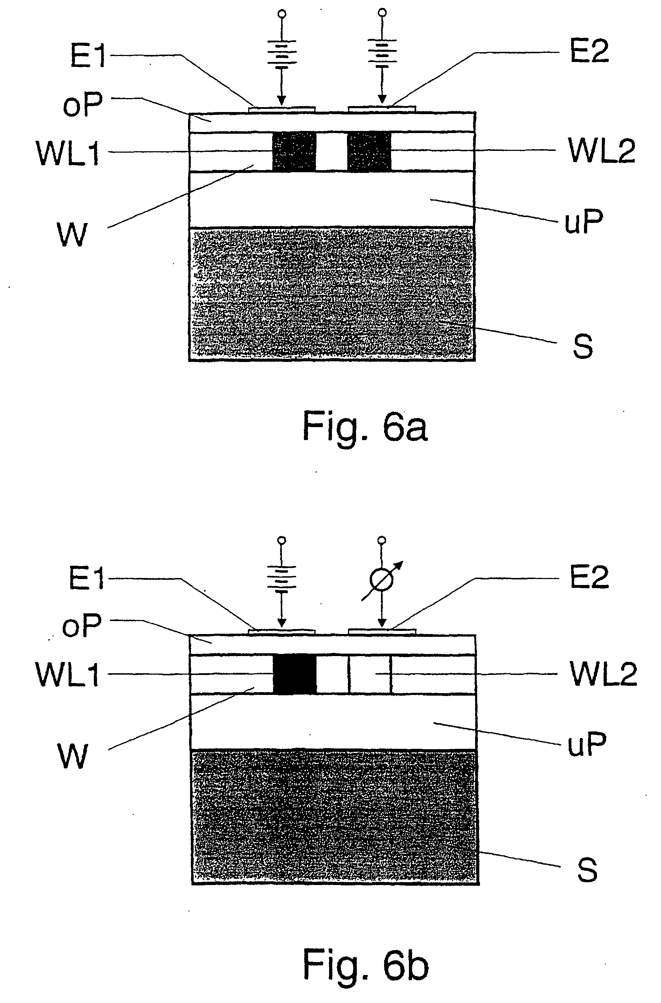

In den Figuren 6a und 6b ist die Schichtstruktur eines erfindungsgemäßen Schalters auf Polyrnerbasis im Querschnitt gemäß Fig. 2 dargestellt. In beiden Strukturen sind die Innenkanten der Elektrodenarme **E1** und **E2** deckungsgleich zu den Innenkanten der darunterliegenden Wellenleiterarme **WL1** und **WL2** angeordnet. Werden, wie in Fig 6a dargestellt, zunächst beide Elektrodenarme **E1** und **E2** gleichzeitig mit gleicher Leistung angesteuert, wirkt der Schalter als symmetrischer Koppler, die Ausbreitungskonstanten des Lichts in den Wellenleitern **WL1** und **WL2** sind gleich, und schaltet in den Kreuz-Zustand. Ist dieser erreicht, wird - wie in Fig. 6b dargestellt - die Ansteuerleistung am Elektrodenarm **E2** weiter erhöht bei gleichzeitig konstant bleibender Ansteuerleistung am Elektrodenarm **E1**. Die Temperaturdifferenz zwischen beiden Elektrodenarmen **E1** und **E2** wird dadurch vergrößert, der Schalter arbeitet somit als asymmetrischer Koppier und schaltet in den Geradeaus-Zustand.

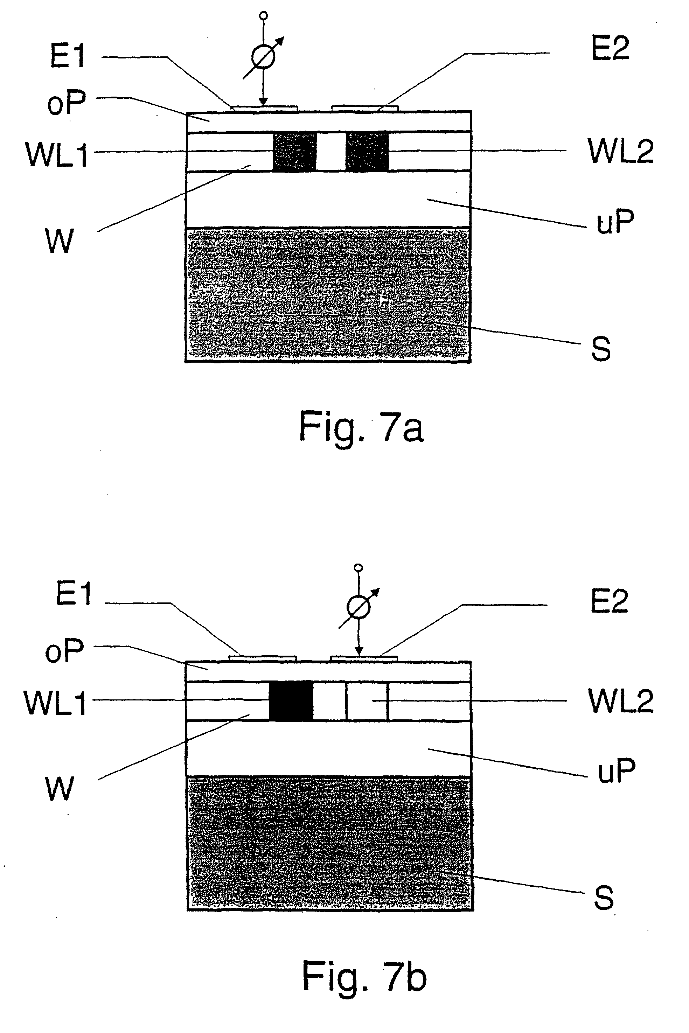

Die Figuren 7a und 7b zeigen wiederum die Schichtstruktur eines erfindungsgemäßen Schalters auf Polymerbasis im Querschnitt gernäß Fig. 2, wobei nunmehr die Innenkanten der Elektrodenarme **E1** und **E2** versetzt zu den Innenkanten der darunterliegenden Wellenleiterarme **WL1** und **WL2** angeordnet sind und jeweils nur ein Elektrodenarm **E1** (Fig. 7a) oder **E2** (Fig. 7b) angesteuert ist. Aufgrund der guten Wärmeleitfähigkeit der Heizelektrode **E** ist bei Anlegen einer zunächst geringen Ansteuerleistung an den Elektrodenarm **E1** dessen Temperatur geringfügig höher als die Temperatur des Elektrodenarms **E2.**

Wegen der geometrischen Asymmetrie der Elektrodcnarme **E1** und **E2** bezüglich der optischen Achse des Schalters verläuft der Wärmetransport vom Elektrodenarm **E2** zum darunterliegenden Wellenleiter **WL2** günstiger als von **E1** zu **WL1**. Damit wird annähernd eine symmetrische Wirkung auf die beiden Wellenleiterarme **WL1** und **WL2** erzielt, so daß die Ausbreitungskonstanten des Lichts in **WL1** und **WL2** bei niedrigen Ansteuerleistungen etwa gleich sind und der Schalter als symmetrischer Koppler arbeitet und in den Kreuz-Zustand schaltet. Wird die Ansteuerleistung am Elektrodenarm **E1** erhöht, vergrößert sich auch die Temperaturdifferenz der beiden Elektrodenarme **E1** und **E2.** Jetzt überwiegt der asymmetrische Schalteffekt und der Koppler schaltet in den Geradeaus-Zustand. Wird der Elektrodenarm **E2** angesteuert, weist der darunterliegende Wellenleiter eine wesentlich höhere Temperatur auf, als der unter dem Elektrodenarm **E1** liegende. Wegen dieser Temperaturdifferenz und der geometrischen Asymmetrie der beiden Elektrodenarme **E1** und **E2** kann der Schalter nur als asymmetrischer Koppler arbeiten und schaltet in den Geradeaus-Zustand. Der Kreuz-Zustand kann mit dieser Anordnung nicht realisiert werden.

In den folgenden Figuren ist das Schaltverhalten des erfindungsgemäßen Schalters, bei dem die Innenkanten der Elektrodenarme **E1** und **E2** zu den Innenkanten der Wellenleiter **WL1** und **WL2** versetzt - wie in Fig. 7a und Fig. 7b dargestellt - angeordnet sind, ist in Abhängigkeit vom Ort der Wärmeerzeugung (in **E1** oder **E2** oder **E1** und **E2** gleichzeitig). Für die Darstellung des Schaltverhaltens des erfindungsgemäßen Schalters wurde Licht einer Laserdiode mit einer Wellenlänge von λ = 1,55 µm in den Eingang **1** des Wellenleiters **WL1** oder in den Eingang **2** des Wellenleiters **WL2** eingekoppelt und die optische Ausgangsleitung in Abhängigkeit von der Heizleistung des entsprechenden Elektrodenarmes am Ausgang **1'** des Wellenleiters **WL1** (geradeaus) und am Ausgang **2'** des Wellenleiters **WL2** (Über-Kreuz) für die TE- und TM-Polarisation gemessen. Da in allen Schaltzuständen nur eine sehr geringe Abhängigkeit von der Polarisation der Lichtwelle festgestellt werden konnte (typisch < 0,5 dB), sind die Schaltkurven in den folgenden Figuren nur für TM-Polarisation dargestellt.

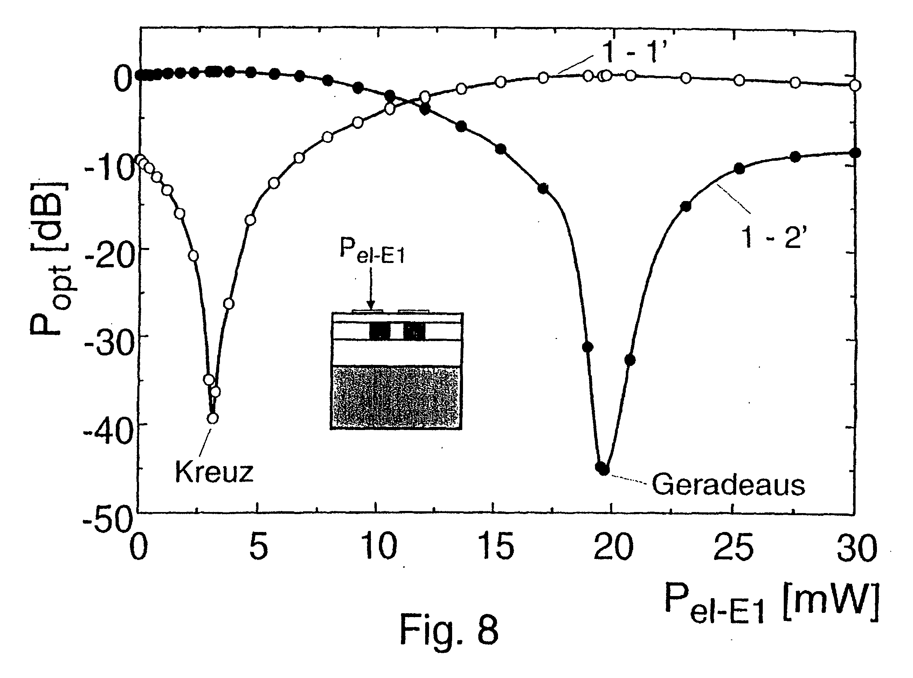

Fig. 8 zeigt das Schaltverhalten des erfindungsgemäßen thermo-optischen Schalters mit bezüglich der Wellenleiter **WL1** und **WL2** versetzten Elektrodenarmen **E1** und **E2,** wenn nur der Elektrodenarm **E1** angesteuert wird (gemäß Fig. 7a, siehe auch eingefügtes Bild). Im leistungslosen Zustand des Schalters befindet sich der Schalter in einem Punkt wenig oberhalb vom Kreuz-Zustand mit einem Extinktionsverhältnis von ∼ 10 dB. Wird nun der Elektrodenarm **E1** angesteuert, dann geht der Schalter erst in den Kreuz-Zustand, wobei ein Extinktionsverhältnis von -42 dB bei 3,1 mW für die TM-Polarisation erreicht wird. In einem Intervall von etwa ± 13 % um diesen Arbeitspunkt, kann ein Nebensprechen von < -30 dB garantiert werden. Wird nun die Heizleistung am Elektrodenarm **E2** erhöht, schaltet der Schalter in den Zustand mit einem Geradeaus-Extinktionsverhältnis von -45 dB bei 19,7 mW. Um wiederum ein Nebensprechen von < -30 dB in diesem Schaltzustand zu garantieren, darf die Heizleistung um etwa ± 5 % bezogen auf den aktuellen Arbeitspunkt schwanken. Die Schaltzeit liegt unter 1 ms.

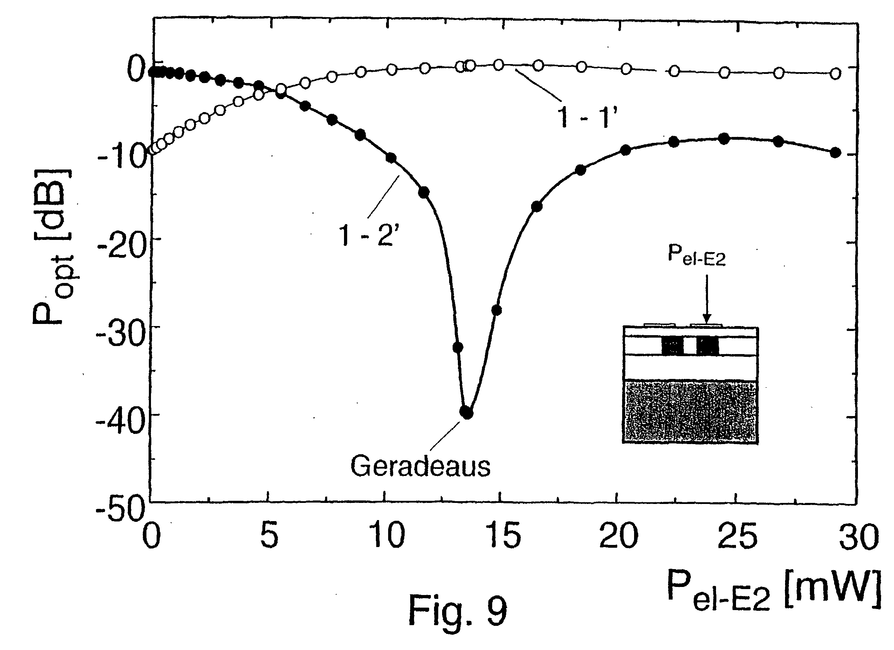

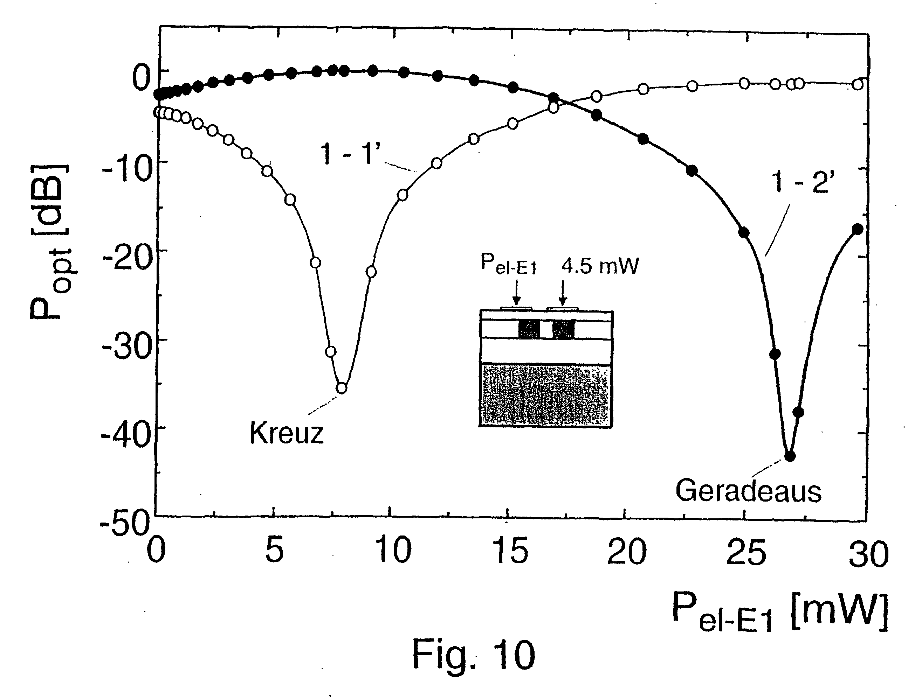

Fig. 9 zeigt das Schaltverhalten eines Schalters für die in Fig. 7b bzw. im eingefügten Bild dargestellte versetzte Anordnung der Elektrodenarme **E1** und **E2** bezüglich der beiden Wellenleiter **WL1** und **WL2,** wobei nun der Elektrodenarm **E2** angesteuert ist. Eine solche Anordnung erreicht nicht den Kreuz-Punkt wie in Fig. 9 zu sehen ist und kann nicht als symmetrischer Schalter betrieben werden. Der Leistungsverbrauch dieses Schalters beträgt etwa 14 mW, um in den Geradeaus-Zustand zu schalten. In dieser Anordnung der Elektrodenarme zu den Wellenleitern und der Ansteuerung des Elektrodenarmes **E2** überwiegt erwartungsgemäß die Wirkung der asymmetrischen Anordnung der Elektrodenarme **E1** und **E2** bezüglich der Wellenleiter **WL1** und **WL2.** Werden beide Elektrodenarme **E1** und **E2** mit einer Heizleistung beaufschlagt, ergibt sich das folgende, in Fig. 10 dargestellte, Schaltverhalten eines erfindungsgemäßen Schalters mit der im eingefügten Bild dargestellten Struktur: Der Elektrodenarm **E2** wird mit einer konstanten Leistung **P**_{**E2**} von 4,5 mW angesteuert und gleichzeitig zur Messung des Schaltverhaltens die Heizleistung **P**_{**E1**} des Elektrodenarmes **E1** erhöht. Dabei zeigt sich, daß die Wirkung der Leistung, mit der der Elektrodenarm **E2** angesteuert ist, zunächst durch Anlegen der gleichen Leistung am Elektrodenarm **E1** kompensiert werden muß, damit der Kreuz-Punkt erreicht wird. Das Ansteuern beider Elektrodenarme erfordert also eine größere Heizleistung.

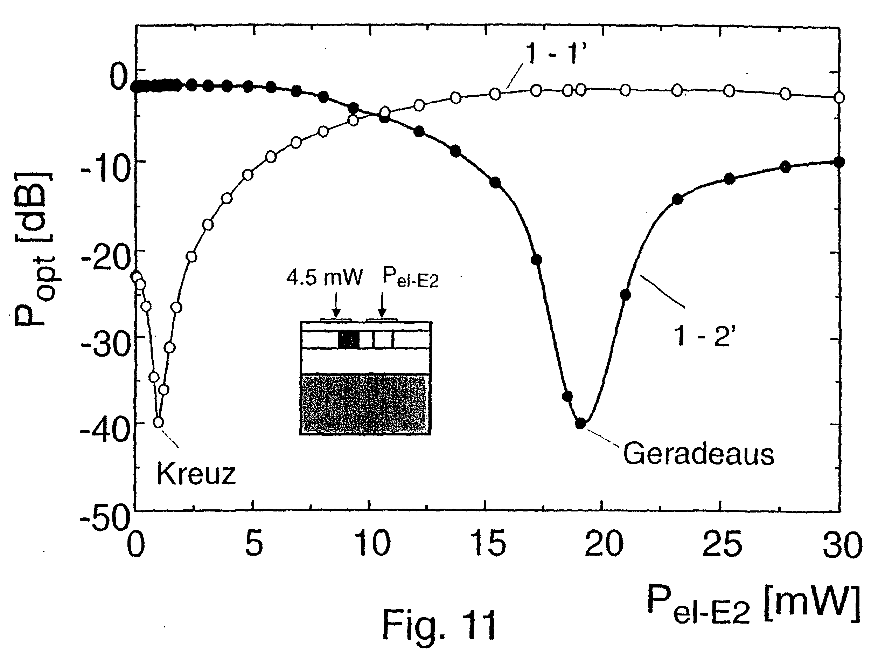

In Fig. 11 ist das Schaltverhalten dargestellt, wenn nunmehr - wie im eingefügten Bild dargestellt - der Elektrodenarm **E2** konstant mit **P**_{**E2**} = 4,5 mW angesteuert und gleichzeitig am Elektrodenarm **E1** die Heizleistung **P**_{**E1**} erhöht wird. Im Vergleich zu Fig. 9 ist zu erkennen, daß bei der Ansteuerung mit nur einer geringen Heizleistung **P**_{**E2**} des Elektrodenarmes **E2** der Schalter mit einer Struktur gemäß Fig. 7a,b in den Über-Kreuz-Zustand schaltet, da der Elektrodenarm **E2** bereits vorgeheizt ist. Bei Vergrößerung der Heizleistung am Elektrodenarm **E2** erreicht der Schalter den Geradeaus-Zustand schnell wegen der wirkenden zusätzlichen geometrischen Asymmetrie. Die Wirkung der Vorheizung des Elektrodenarmes **E1** ist äquivalent der Aufhebung der geometrischen Asymmetrie der Lage der Elektrodenarme **E1** und **E2** zu den entsprechenden Wellenleitern **WL1** und **WL2.** Die Kenntnis des Schaltverhaltens in verschiedenen - jedoch gleichzeitigen - Ansteuerzuständen der Elektrodenarme **E1** und **E2** ermöglicht eine flexible Gestaltung und Herstellung des erfindungsgemäßen thermo-optischen Schalters.

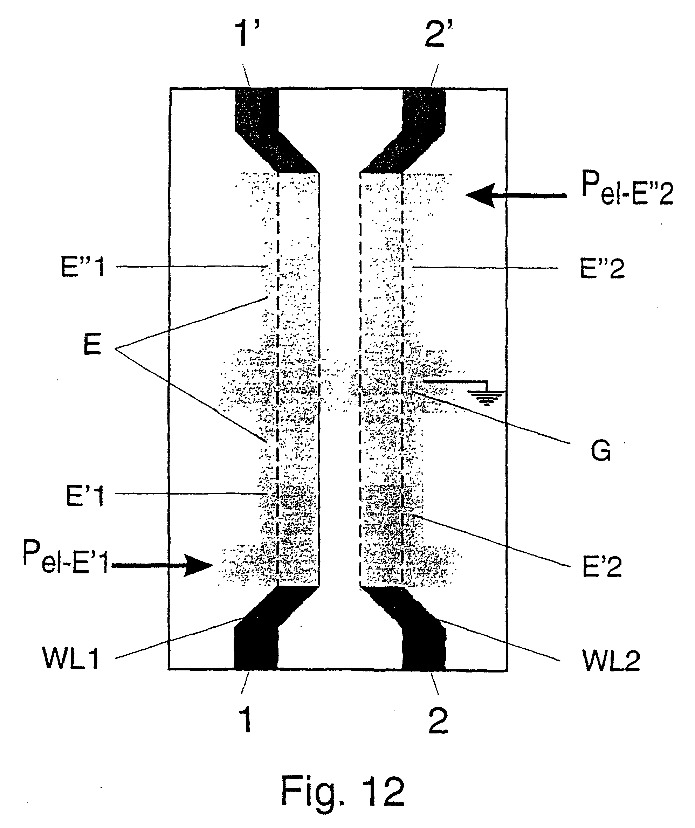

Fig. 12 zeigt eine schematische Draufsicht auf einen erfindungsgemäßen thermo-optischen Schalter auf Polymerbasis, bei dem die Heizelektrode H-förmig ausgebildet ist, wobei der die beiden Elektrodenarme verbindende Steg **G** mittig zu den Elektrodenarmen angeordnet ist und die Elektrodenarme in Teilelektrodenarme **E'1, E'2** und **E"1, E"2** unterteilt sind und jeweils ein Teilelektrodenarm gleichzeitig mit dem punktsymmetrisch angeordneten Teilelektrodenarm ansteuerbar ist. In einer solchen Anordnung kann ein Δβ-Richtkoppler dadurch realisiert werden, daß jeweils ein Teilelektrodenarm gleichzeitig mit dem punktsymmetrisch angeordneten Teilelektrodenarm - also **E'1** und **E"2** oder **E'2** und **E"1** - elektrisch angesteuert sind. Damit wird in den beiden Teilelektrodenarmen **E'1** und **E'2** bzw. **E"1** und **E"2** jeweils ein Temperaturgradient erzeugt, der dem anderen entgegengerichtet ist. In den darunterliegenden Abschnitten der Wellenleiter **WL1** und **WL2** kann aufgrund des thermo-optischen Effektes eine Differenz der Ausbreitungsgeschwindigkeiten des Lichtes in den beiden Teilelektrodenarmen **E'1** und **E'2** oder **E"1** und **E"2** eingestellt werden, die den gleichen Betrag, jedoch alternierendes Vorzeichen aufweist, bzw. bei Verwendung von zwei Ansteuerquellen unterschiedlich große Δβ.

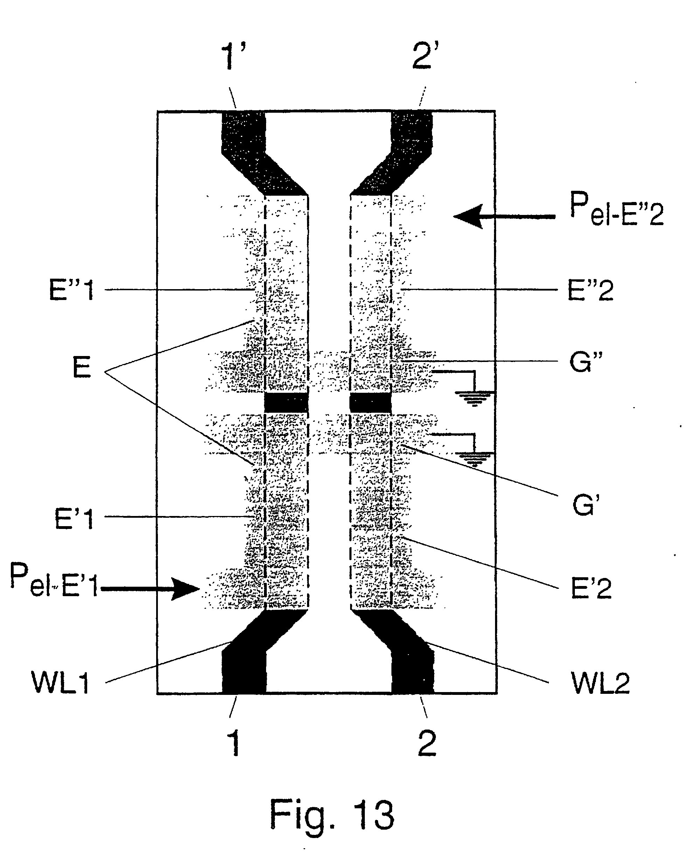

Diese Ausführungsform gestattet die Erweiterung der in Fig. 5 dargestellten erlaubten Abweichung der Wechselwirkungslänge **L** sowohl in ihrer Ausdehnung zu größeren Wechselwirkungslängen hin, als auch zu - vom Betrag her gleichen - kleineren Wechselwirkungslängen. Innerhalb des nunmehr erweiterten Bereiches der Wellenlänge **L** um den Punkt L = L_{c}, wobei L_{c} die Koppellänge am Kreuz-Punkt ist, wirkt der Schalter als symmetrischer Schalter und kann in den ersten Kreuz-Punkt schalten. Aus Fig. 5 ist ebenfalls zu erkennen, daß bei Abweichungen der Wechselwirkungslänge **L** von der Koppellänge L_{c} das Übersprechen schlecht wird. Die in Fig. 12 sowie die in der folgenden Figur 13 gezeigte Ausführungsform ermöglicht und garantiert durch die Kombination einer Richtkoppler-Anordnung mit alternierendern Δβ und der beschriebenen Varianten zur Erzeugung einer geometrischen und/oder materialspezifischen Asymmetrie des erfindungsgemäßen Schalters bezüglich seiner optischen Achse die genaue Einstellung des Übersprechens wie ein genau getroffener Wert L = L_{c}.

Auch in Fig. 13, in der im Vergleich zu Fig. 12 zwei Paar lamellenartig ausgebildete und je Paar über einen gemeinsamen Steg verbundene Elektrodenarme angeordnet sind, treten die bereits erwähnten Vorteile auf. Nun sind also die beiden Elektrodenarme **E'1** und **E'2** des einen Elektrodenarmpaares mit dem Steg **G'** und die beiden Elektrodenarme **E"1** und **E"2** des anderen Elektrodenarmpaares mit dem Steg **G"** miteinander verbunden (Doppel-U-förmige Elektrodenkonfiguration). Die Wirkung des in Fig. 12 beschriebenen Schalters wird noch weiter verstärkt, da durch die Isolierung der beiden Stege **G'** und **G"** der Wärmeaustausch zwischen den Elektrodenarmen **E'1** und **E'2** oder **E"1** und **E"2** eines Elektrodenarmpaares besser auch nur auf die Arme eines Elektrodenarmpaares beschränkt ist und die Wechselwirkung zum anderen Elektrodenarmpaar wesentlich verringert ist.

## Patentansprüche

1. Thermo-optischer Schalter mit einer auf einem Substrat (S) angeordneten Schichtstruktur, welche eine Richtkoppler-Wellenleiterstruktur in einer wellenleitenden Schicht (W) und eine der Form der Kopplerstruktur angepaßte Konfiguration der Heizelektrode (E) oberhalb der wellenleitenden Schicht (W) enthält,
**dadurch gekennzeichnet, daß**
zwei über ihre Wechsetwirkungslänge (L) dicht benachbart verlaufende Wellenleiter (WL1 und WL2) mindestens teilweise in ihrer Breite von mindestens einem Paar lamellenartig ausgebildeten, über einen gemeinsamen Steg (G) verbundenen Elektrodenarmen der Heizelektrode (E) bedeckt sind, wobei jeder Wellenleiter (WL1, WL2) über seine Wechselwirkungslänge (L) mit dem anderen Wellenleiter (WL2, WL1) vollständig von einem Elektrodenarm eines Elektrodenarmpaares bedeckt ist und die freien Enden der lamellenartig ausgebildeten Elektrodenarme eines Paares in die gleiche Richtung weisen,
die Elektrodenarme eine ähnliche geometrische Form aufweisen wie die darunterliegenden Wellenleiter (WL1 und WL2),
Mittel vorhanden sind, wodurch mindestens ein Elektrodenarm eines Elektrodenarmpaares elektrisch angesteuerbar ist, und
weitere Mittel zur Änderung und/oder Einstellung der thermischen und/oder geometrischen Symmetrie/Asymmetrie der Brechungsindizes in den beiden über ihre Wechselwirkungslänge (L) dicht benachbart verlaufenden Wellenleitern (WL1 und WL2) vorhanden sind.

2. Thermo-optischer Schalter mit einer auf einem Substrat (S) angeordneten Schichtstruktur, welche eine Richtkoppler-Wellenleiterstruktur in einer wellenleitenden Schicht (W) und eine der Form der Kopplerstruktur angepaßte Konfiguration der Heizelektrode (E) oberhalb der wellenleitenden Schicht (W) enthält,
**dadurch gekennzeichnet, daß**
zwei über ihre Wechselwirkungslänge (L) dicht benachbart verlaufende Wellenleiter (WL1, WL2) mindestens teilweise in ihrer Breite von zwei Paar lamellenartig ausgebildeten, je Paar über einen gemeinsamen Steg (G', G") verbundenen Elektrodenarmen (E'1, E'2, E"1 und E"2) bedeckt sind, wobei die beiden Stege (G', G") thermisch und elektrisch voneinander isoliert und symmetrisch zueinander angeordnet sind,
die Elektrodenarme eine ähnliche geometrische Form aufweisen wie die darunterliegenden Wellenleiter (WL1 und WL2),
Mittel vorhanden sind, wodurch mindestens ein Elektrodenarm eines Elektrodenarmpaares ansteuerbar ist, und
weitere Mittel zur Änderung und/oder Einstellung der thermischen und/oder geometrischen Symmetrie/Asymmetrie der Brechungsindizes in den beiden über ihre Wechselwirkungslänge (L) dicht benachbart verlaufenden Wellenleitern (WL1 und WL2) vorhanden sind.

3. Thermo-optischer Schalter nach einem der Ansprüche 1 oder 2,
**dadurch gekennzeichnet, daß**
die Elektrodenarme eines Elektrodenarmpaares versetzt zu den darunterliegenden Wellenleitern (WL1 und WL2) angeordnet sind.

4. Thermo-optischer Schalter nach einem der Ansprüche 1 oder 2,
**dadurch gekennzeichnet, daß**
die Innenkanten der Elektrodenarme eines Elektrodenarmpaares deckungsgleich bezüglich der Innenkanten der beiden darunterliegenden Wellenleiter (WL1 und WL2) angeordnet sind.

5. Thermo-optischer Schalter nach Anspruch 1,
**dadurch gekennzeichnet, daß**
die zwei über ihre Wechselwirkungslänge dicht benachbart angeordneten Wellenleiter (WL1 und WL2) parallel zueinander geführt sind.

6. Thermo-optischer Schalter nach Anspruch 1,
**dadurch gekennzeichnet, daß**
die Heizelektrode (E) H-förmig ausgebildet ist, wobei der die beiden Elektrodenarme verbindende Steg (G) mittig zu den Elektrodenarmen angeordnet ist und die Elektrodenarme in Teilelektrodenarme (E'1, E"1 und E'2, E"2) unterteilt sind und jeweils ein Teilektrodenarm (E'1 oder E'2) gleichzeitig mit dem punktsymmentrisch angeordneten Teilelektrodenarm (E"2 oder E"1) ansteuerbar ist.

7. Thermo-optischer Schalter nach Anspruch 1,
**dadurch gekennzeichnet, daß**
die Mittel zur Änderung der thermischen und/oder geometrischen Symmetrie/Asymmetrie der Brechungsindizes in den beiden über ihre Wechselwirkungslänge (L) dicht benachbart verlaufenden Wellenleitern (WL1 und
WL2) Mittel sind, wodurch beide Elektrodenarme (E1 und E2) elektrisch ansteuerbar sind und wahlweise einer der beiden Elektrodenarme (E1 oder E2) mit einer konstanten Vorspannung beaufschlagbar ist.

8. Thermo-optischer Schalter nach Anspruch 1,
**dadurch gekennzeichnet, daß**
wahlweise nur ein Elektrodenarm (E1 oder E2) angesteuert ist.

9. Thermo-optischer Schalter nach mindestens einem der vorangehenden Ansprüche,
**dadurch gekennzeichnet, daß**
die Mittel zur Einstellung der thermischen und/oder geometrischen Symmetrie/Asymmetrie der Brechungsindizes in den beiden über ihre Wechselwirkungslänge (L) dicht benachbart verlaufenden Wellenleitern (WL1 und WL2) unterschiedlich breit ausgebildete Elektrodenarme sind.

10. Thermo-optischer Schalter nach mindestens einem der vorangehenden Ansprüche,
**dadurch gekennzeichnet, daß**
die Mittel zur Einstellung der thermischen und/oder geometrischen Symmetrie/Asymmetrie der Brechungsindizes in den beiden über ihre Wechselwirkungslänge (L) dicht benachbart verlaufenden Wellenleitern (WL1 und WL2) unterschiedlich dick ausgebildete Elektrodenarme sind.

11. Thermo-optischer Schalter nach mindestens einem der vorangehenden Ansprüche,
**dadurch gekennzeichnet, daß**
die Mittel zur Einstellung der thermischen und/oder geometrischen Symmetrie/Asymmetrie der Brechungsindizes in den beiden über ihre Wechselwirkungslänge (L) dicht benachbart verlaufenden Wellenleitern (WL1 und WL2) aus unterschiedlichem Material ausgebildete Elektrodenarme sind.

12. Thermo-optischer Schalter nach Anspruch 1 oder 2,
**dadurch gekennzeichnet, daß**
die Mittel zur Einstellung der thermischen und/oder geometrischen Symmetrie/Asymmetrie der Brechungsindizes in den beiden über ihre Wechselwirkungslänge (L) dicht benachbart verlaufenden Wellenleitern (WL1 und WL2) unterschiedliche Brechungsindizes aufweisende Wellenleiter (WL1 und WL2) sind.

13. Thermo-optischer Schalter nach Anspruch 1 oder 2,
**dadurch gekennzeichnet, daß**
die Mittel zur Einstellung der thermischen und/oder geometrischen Symmetrie/Asymmetrie der Brechungsindizes in den beiden über ihre Wechselwirkungslänge (L) dicht benachbart verlaufenden Wellenleitern (WL1 und WL2) unterschiedlich breit ausgebildete Wellenleiter (WL1 und WL2) sind.

14. Thermo-optischer Schalter nach Anspruch 1 oder 2
**dadurch gekennzeichnet, daß**
auf dem Substrat (S) eine untere Pufferschicht (uP), auf dieser eine Polymer-Wellenleiter (WL1 und WL2) enthaltende wellenleitende Schicht (W) und darauf eine obere Pufferschicht (oP) angeordnet sind, auf der die Heizelektrode (E) die Polymer-Wellenleiter (WL 1 und WL2) bedeckend angeordnet ist.

15. Thermo-optischer Schalter nach Anspruch 14,
**dadurch gekennzeichnet, daß**
der Brechungsindex der unteren Pufferschicht (uP) nur wenig kleiner ist als der Brechungsindex der Wellenleiter (WL1 und WL2) und die Differenz der Brechungsindizes etwa 0,005 beträgt.

16. Thermo-optischer Schalter nach Anspruch 14,
**dadurch gekennzeichnet**, d a ß
die untere Pufferschicht (uP) aus zwei Teilschichten (uPl und uP2) besteht, wobei die dem Substrat (S) benachbarte Teilschicht (uP1) einen viel kleineren Brechungsindex als die Wellenleiter (WL1 und WL2) aufweist.

17. Thermo-optischer Schalter nach Anspruch 14,
**dadurch gekennzeichnet, daß**
die Differenz der Brechungsindizes zwischen den Wellenleitern (WL1 und WL2) und der oberen Pufferschicht (oP) etwa 0,2 beträgt.

## Claims

1. Thermo-optical switch having, arranged on a substrate (S), a layer structure which contains a directional-coupler waveguide structure in a waveguiding layer (W) and a configuration of the heating electrode (E), which is matched to the shape of the coupler structure, above the waveguiding layer (W),
**characterised in that**
two waveguides (WL1 and WL2), extending close to one another over their interaction length (L), are covered at least partially in their width by at least one pair of lamellarly designed electrode arms of the heating electrode (E), which are connected by a common span (G), with each waveguide (WL1, WL2) being covered completely over its interaction length (L) with the other waveguide (WL2, WL1) by one electrode arm of an electrode arm pair, and with the free ends of the lamellarly designed electrode arms of a pair pointing in the same direction, the electrode arms have a similar geometrical shape to the waveguides (WL1 and WL2) lying underneath, means are present such that at least one electrode arm of an electrode arm pair is electrically driveable, and further means are present for changing and/or adjusting the thermal and/or geometrical symmetry/asymmetry of the refractive index in the two waveguides (WL1 and WL2) extending close to one another over their interaction length (L).

2. Thermo-optical switch having, arranged on a substrate (S), a layer structure which contains a directional-coupler waveguide structure in a waveguiding layer (W) and a configuration of the heating electrode (E)., which is matched to the shape of the coupler structure, above the waveguiding layer (W),
**characterised in that**
two waveguides (WL1 and WL2), extending close to one another over their interaction length (L), are covered at least partially in their width by two pairs of lamellarly designed electrode arms (E'1, E'2, E''1 and E''2), each pair being connected by a common span (G', G''), with the two common spans (G', G'') being thermally and electrically insulated from one another and arranged symmetrically with respect to one another, the electrode arms have a similar geometrical shape to the waveguides (WL1 and WL2) lying underneath, means are present such that at least one electrode arm of an electrode arm pair is driveable, and further means are present for changing and/or adjusting the thermal and/or geometrical symmetry/asymmetry of the refractive index in the two waveguides (WL1 and WL2) extending close to one another over their interaction length (L).

3. Thermo-optical switch according to Claim 1 or 2,
**characterised in that**
the electrode arms of an electrode arm pair are arranged offset with respect to the waveguides (WL1 and WL2) lying underneath.

4. Thermo-optical switch according to Claim 1 or 2,
**characterised in that** the inner edges of the electrode arms of an electrode arm pair are arranged congruently with respect to the inner edges of the two waveguides (WL1 and WL2) lying underneath.

5. Thermo-optical switch according to Claim 1,
**characterised in that** the two waveguides (WL1 and WL2) extending close to one another over their interaction length are routed parallel to one another.

6. Thermo-optical switch according to Claim 1,
**characterised in that**
the heating electrode (E) has an H-shaped design, with the span (G) connecting the two electrode arms being arranged centrally with respect to the electrode arms and with the electrode arms being subdivided into electrode arm portions (E'1, E''1 and E'2, E"2), and in each case with an electrode arm portion (E'1 or E'2) being driveable simultaneously with the point-symmetrically arranged arm portion (E''2 or E''1).

7. Thermo-optical switch according to Claim 1,
**characterised in that**
the means for changing the thermal and/or geometrical symmetry/asymmetry of the refractive index in the two waveguides (WL1 and WL2) extending close to one another over their interaction length (L) are means such that both electrode arms (E1 and E2) are electrically driveable, and a constant bias voltage can be applied selectively to one of the two electrode arms (E1 or E2).

8. Thermo-optical switch according to Claim 1,
**characterised in that**
only one electrode arm (E1 or E2) is selectively driven.

9. Thermo-optical switch according to at least one of the preceding claims,
**characterised in that**
the means for adjusting the thermal and/or geometrical symmetry/asymmetry of the refractive index in the two waveguides (WL1 and WL2) extending close to one another over their interaction length (L) are electrode arms designed with different widths.

10. Thermo-optical switch according to at least one of the preceding claims,
**characterised in that**
the means for adjusting the thermal and/or geometrical symmetry/asymmetry of the refractive index in the two waveguides (WL1 and WL2) extending close to one another over their interaction length (L) are electrode arms designed with different thicknesses.

11. Thermo-optical switch according to at least one of the preceding claims,
**characterised in that**
the means for adjusting the thermal and/or geometrical symmetry/asymmetry of the refractive index in the two waveguides (WL1 and WL2) extending close to one another over their interaction length (L) are electrode arms made of different materials.

12. Thermo-optical switch according to Claim 1 or 2,
**characterised in that**
the means for adjusting the thermal and/or geometrical symmetry/asymmetry of the refractive index in the two waveguides (WL1 and WL2) extending close to one another over their interaction length (L) are waveguides (WL1 and WL2) having different refractive indices.

13. Thermo-optical switch according to Claim 1 or 2,
**characterised in that**
the means for adjusting the thermal and/or geometrical symmetry/asymmetry of the refractive index in the two waveguides (WL1 and WL2) extending close to one another over their interaction length (L) are waveguides (WL1 and WL2) designed with different widths.

14. Thermo-optical switch according to Claim 1 or 2,
**characterised in that**
a lower buffer layer (up) is arranged on the substrate (S), a waveguiding layer (W) containing polymer waveguides (WL1 and WL2) is arranged on the latter, and an upper buffer layer (oP), on which the heating electrode (E) is arranged such that it covers the polymer waveguides (WL1 and WL2), is arranged on top.

15. Thermo-optical switch according to Claim 14,
**characterised in that**
the refractive index of the lower buffer layer (uP) is only slightly less than the refractive index of the waveguides (WL1 and WL2), and the difference in refractive index is approximately 0.005.

16. Thermo-optical switch according to Claim 14,
**characterised in that**
the lower buffer layer (uP) consists of two layer portions (uP1 and uP2), with the layer portion (uP1) next to the substrate (S) having a much lower refractive index than the waveguides (WL1 and WL2).

17. Thermo-optical switch according to Claim 14,
**characterised in that**
the difference in refractive index between the waveguides (WL1 and WL2) and the upper buffer layer (oP) is approximately 0.2.

## Revendications

1. Commutateur thermo-optique comportant une structure en couche sur un substrat (S), cette structure ayant une structuré de guides d'ondes de coupleur directionnel dans une couche guide d'ondes (W) et une configuration de l'électrode de chauffage (E) adaptée à la forme de la structure de coupleur au-dessus de la couche guide d'ondes (W),
**caractérisé en ce que**
deux guides d'ondes (WL1, WL2) étroitement voisins par leur longueur de coopération (L), sont couverts au moins en partie dans leur largeur par au moins une paire de bras de l'électrode de chauffage (E) en forme de lamelles, reliée par une entretoise commune (G),
chaque guide d'ondes (WL1, WL2) étant couvert sur sa longueur de coopération (L) avec l'autre guide d'ondes (WL2, WL1), complètement par un bras d'électrode de la paire de bras d'électrode, dont les extrémités libres des bras d'électrode en forme de lamelles d'une paire sont dirigées dans la même direction,
les bras d'électrode ont une forme géométrique analogue à celle des guides d'ondes (WL1, WL2) situés en dessous,
des moyens étant prévus pour commander électriquement au moins un bras d'une paire d'électrodes, et
d'autres moyens sont prévus pour modifier et/ou régler la symétrie/asymétrie thermique et/ou géométrique de l'indice de réfraction dans les deux guides d'ondes (WL1, WL2) étroitement rapprochés sur leur longueur de coopération (L).

2. Commutateur thermo-optique comportant une structure de couche installée sur un substrat (S) et ayant une structure de guide d'ondes de coupleur directionnel dans une couche guide d'ondes (W) et une électrode de chauffage (E) de configuration adaptée à la forme de la structure de coupleur, au-dessus de la couche guide d'ondes (W),
**caractérisé en ce que**
deux guides d'ondes (WL1, WL2) étroitement rapprochés sur leur longueur de coopération (L), sont recouverts au moins partiellement dans leur largeur par deux paires de bras d'électrode (E'1, E'2, E"1, E"2), reliés par une entretoise commune (G', G") pour chaque paire, ces bras étant en forme de lamelles, et les deux entretoises (G', G") sont isolées thermiquement et électriquement l'une de l'autre et sont disposées de manière symétrique,
les bras d'électrode ont une forme géométrique analogue à celle des guides d'ondes (WL1, WL2) qui se trouvent en dessous,
des moyens étant prévus pour commander au moins un bras d'une paire d'électrodes et d'autres moyens sont prévus pour modifier et/ou régler la symétrie/asymétrie thermique et/ou géométrique de l'indice de réfraction dans les deux guides d'ondes (WL1, WL2) étroitement rapprochés sur leur longueur de coopération (L).

3. Commutateur thermo-optique selon l'une des revendications 1 ou 2,
**caractérisé en ce que**
les bras d'une paire d'électrodes sont décalés par rapport aux guides d'ondes (WL1, WL2) qui se trouvent en dessous.

4. Commutateur thermo-optique selon l'une des revendications 1 ou 2,
**caractérisé en ce que**
les arêtes intérieures des bras d'électrode d'une paire de bras d'électrode sont installées en concordance par rapport aux arêtes intérieures des deux guides d'ondes (WL1, WL2) qui se trouvent en dessous.

5. Commutateur thermo-optique selon la revendication 1,
**caractérisé en ce que**
les deux guides d'ondes (WL1, WL2) étroitement rapprochés suivant leur longueur de coopération sont parallèles.

6. Commutateur thermo-optique selon la revendication 1,
**caractérisé en ce que**
l'électrode de chauffage (E) a une forme de H, l'entretoise (G) reliant les deux bras d'électrode étant installée au milieu des bras d'électrode et les bras d'électrode sont subdivisés en des parties de bras d'électrode (E'1, E"1 et E'2, E"2) et chaque fois une partie de bras d'électrode (E'1 ou E'2) se commande en même temps avec la partie de bras d'électrode (E"2 ou E"1) symétrique selon une symétrie par rapport à un point.

7. Commutateur thermo-optique selon la revendication 1,
**caractérisé en ce que**
les moyens pour modifier la symétrie/asymétrie thermique et/ou géométrique de l'indice de réfraction dans les deux guides d'ondes (WL1, WL2) étroitement voisins sur leur longueur de coopération (L), sont des moyens permettant de commander électriquement les deux bras d'électrode (E1, E2) et d'appliquer sélectivement une tension de polarisation constante à l'un des deux bras d'électrode (E1, E2).

8. Commutateur thermo-optique selon la revendication 1,
**caractérisé en ce qu'**
un seul bras d'électrode (E1, E2) est commandé sélectivement.

9. Commutateur thermo-optique selon l'une quelconque des revendications précédentes,
**caractérisé en ce que**
les moyens de réglage de la symétrie/asymétrie thermique/géométrique de l'indice de réfraction des deux guides d'ondes (WL1, WL2) étroitement rapprochés au niveau de leur longueur de coopération (L) sont des bras d'électrode de largeur différente.

10. Commutateur thermo-optique selon au moins l'une quelconque des revendications précédentes,
**caractérisé en ce que**
les moyens de réglage de la symétrie/asymétrie thermique/géométrique de l'indice de réfraction des deux guides d'ondes (WL1, WL2) étroitement rapprochés au niveau de leur longueur de coopération (L) sont des bras d'électrode d'épaisseur différente.

11. Commutateur thermo-optique selon au moins l'une quelconque des revendications précédentes,
**caractérisé en ce que**
les moyens de réglage de la symétrie/asymétrie thermique/géométrique de l'indice de réfraction des deux guides d'ondes (WL1, WL2) étroitement rapprochés au niveau de leur longueur de coopération (L) sont **caractérisés en ce que** les bras d'électrode sont réalisés dans des matières différentes.

12. Commutateur thermo-optique selon au moins l'une des revendications précédentes,
**caractérisé en ce que**
les moyens de réglage de la symétrie/asymétrie thermique/géométrique de l'indice de réfraction des deux guides d'ondes (WL1, WL2) étroitement rapprochés au niveau de leur longueur de coopération (L) sont des guides d'ondes (WL1, WL2) ayant un indice de réfraction différent.

13. Commutateur thermo-optique selon au moins l'une des revendications 1 ou 2,
**caractérisé en ce que**
les moyens de réglage de la symétrie/asymétrie thermique/géométrique de l'indice de réfraction des deux guides d'ondes (WL1, WL2) étroitement rapprochés au niveau de leur longueur de coopération (L) sont des guides d'ondes (WL1, WL2) ayant une largeur différente.

14. Commutateur thermo-optique selon la revendication 1 ou 2,
**caractérisé en ce que**
sur le substrat (S), on a une couche (W) guides d'ondes, contenant une couche tampon inférieure (uP) avec sur celle-ci un guide d'ondes en polymère (WL1, WL2) et par-dessus une couche tampon supérieure (oP) sur laquelle se trouve une électrode de chauffage (E) couvrant les guides d'ondes en polymère (WL1, WL2).

15. Commutateur thermo-optique selon la revendication 14,
**caractérisé en ce que**
l'indice de réfraction de la couche tampon (uP) inférieure n'est que légèrement plus faible que l'indice de réfraction des guides d'ondes (WL1, WL2) et la différence des indices de réfraction est de l'ordre de 0,005.

16. Commutateur thermo-optique selon la revendication 14,
**caractérisé en ce que**
la couche tampon inférieure (uP) se compose de deux couches partielles (uP1, uP2) et la couche partielle (uP1) voisine du substrat (S) présente un indice de réfraction beaucoup plus petit que les guides d'ondes (WL1, WL2).

17. Commutateur thermo-optique selon la revendication 14,
**caractérisé en ce que**
la différence des indices de réfraction entre les guides d'ondes (WL1, WL2) et la couche tampon supérieure (oP) est de l'ordre de 0,2.
